(19) Europäisches Patentamt / European Patent Office / Office européen des brevets

(11) **EP 4 764 961 A1**

(12) **EUROPEAN PATENT APPLICATION**

(43) Date of publication:
**24.06.2026 Bulletin 2026/26**

(21) Application number: **24221268.6**

(22) Date of filing: **18.12.2024**

(51) International Patent Classification (IPC):
**G06N 3/092** $^{(2023.01)}$    **G06N 20/00** $^{(2019.01)}$

(52) Cooperative Patent Classification (CPC):
**G06N 20/00; G06N 3/006; G06N 3/08; G06N 3/092;
G06N 7/01**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **British Telecommunications Public
Limited Company
London E1 8EE (GB)**

(72) Inventor: **The designation of the inventor has not
yet been filed**

(74) Representative: **British Telecommunications
public limited company
Intellectual Property Department
9th Floor
One Braham
Braham Street
London E1 8EE (GB)**

(54) **INTELLIGENT AGENT SYSTEM**

(57)    A computer-implemented method of training an intelligent agent system for influencing the operation of a physical system to achieve an objective relating to an intended state of the physical system is described. The method comprises performing a respective reinforcement learning process for an intelligent agent, the reinforcement learning process being conducted within an environment that provides a representation of the physical system, the agent being trained to achieve the objective within the environment by carrying out one or more actions selected from a respective set of available actions, the training being based on a reward that is determined by the reinforcement learning process for each of the training steps. The reinforcement learning process comprises providing, to the agent, a set of observations of the environment of that agent, the agent being configured to select the one or more actions in dependence on the set of observations to achieve the objective, the set of observations being provided in a data structure in which the set of observations are arranged in an order which is dependent on a starting position of the agent and/or a position relating to the objective, within the environment.

Figure 4

## Description

## Field of the Invention

The present invention relates to an intelligent agent. In particular, it relates to an intelligent agent system for influencing the operation of a physical system, such as a computer network, to achieve an objective relating to an intended state of the physical system.

## Background to the Invention

Intelligent agents (or just "agents") are agents which have been configured to autonomously carry out actions within an environment in order to achieve a particular objective. Such agents typically comprise one or more sensors for sensing a current state of their environment, one or more actuators for carrying out a set of potential actions that the agent may take to effect changes to the environment and decision logic for deciding which of the set of actions should be taken given the current state of the environment in order to achieve their objective.

Reinforcement learning is a machine learning technique that can be used to train an intelligent agent to achieve its objective. Fundamental to reinforcement learning is the use of a reward (which can be either positive or negative) to reflect the desirability of particular environmental states. During training, the intelligent agent explores the rewards that are available for taking different actions within an environment. Specifically, the training process takes place over a number of discrete time steps, with the agent choosing to take one or more actions from a set of possible actions in each step (which may include a "no action" action - that is a positive decision that no action should be taken during that time step). Accordingly, the state of the environment will transition from an initial state to a subsequent state at each time step according to the actions that have been taken. The subsequent state for each time step can be assessed and a corresponding reward determined for the actions that were taken by the agent during that time step that resulted in the transition from the initial state to the subsequent state for that time step. Therefore, over time, the agent learns which actions (or sequences of actions) are most likely to lead to the highest reward for any given state of the environment in which it is operating.

The environment in which the training takes place may be referred to as the "training" environment. In some cases, the "training" environment may be the "live" environment. However, it is generally more common for a specific "training" environment to be created that is separate from the "live" environment. In general, the "training" environment may be created to mimic the "live" environment as closely as possible. However, even where this is not possible, a "training" environment that shares at least some features with the "live" environment can provide the intelligent agent with sufficient experience to be able to make useful decisions in the "live" environment. This may be referred to as generalisation in Reinforcement Learning. Indeed, an agent may be trained within multiple different training environments with the goal of encouraging it to learn to generalise which actions are beneficial in a "live" environment without needing knowledge of the specific configuration and features of the "live" environment.

Formally, reinforcement learning may be represented as a Markov Decision Process (MDP) in which:

$S$ is a finite set of states in which the environment can exist;

$A$ is a finite set of actions that can be taken by the agent;

$P$ is a state transition probability matrix $P_{ss'}^a = \mathbb{P}[S_{t+1} = s'|S_t = s, A_t = a]$ representing the probability of transitioning to a particular environmental state $s'$ at the next time step given the current environmental state $s$ when a particular action $a$ is taken by the agent;

$R$ is a reward function $R_s^a = [R_{t+1}|S_t = s, A_t = a]$ specifying the reward that is available in each state $s$, for each action $a$ that can be taken by the agent.

A policy function $\pi(a|s) = \mathbb{P}[A_t = a|S_t = s]$ can then be determined for the agent that defines the probability that an agent takes a particular action $a$ in a time step $t$ given the current state $s$ of the environment in that time step $t$. This policy function $\pi$ defines how the agent will behave when it is deployed. The goal of training the agent is therefore to attempt to find an optimal policy function $\pi^*$ for the agent to follow which delivers the maximum reward. Of course, it will be appreciated that the optimal policy function $\pi^*$ that is determined during training may not necessarily be the best policy function in absolute terms but is better than a number of the other policy functions that could have been determined (including for example a randomly determined policy function).

In order to optimize the policy function $\pi$, consideration is given to optimizing the return from a value function $V_\pi(s)$ for the policy $\pi$. This function $V_\pi(s) = E\left[\sum_{t=0}^{\infty} \gamma^t R_t |S_t\right]$ reflects the reward that can be expected by the agent from each environmental state $s$ when following the policy $\pi$. The function $V_\pi(s)$ incorporates both the reward provided for being in the current state, but also the expected rewards that the agent can expect in future time steps starting from that state. In this function $V_\pi(s)$, $\gamma$ is a discount factor $0 \le \gamma \le 1$ which controls how much importance is placed on the rewards obtained in future time steps from the current state *s*. As will be appreciated, the function $V_\pi(s)$ is dependent on the particular policy $\pi$ being followed as the rewards that can be expected from a particular state *s* will depend on the actions that are taken by the agent from that state as defined by the policy $\pi$. Accordingly, an optimal policy $\pi^*$ can be considered to be one which maximizes the return from its corresponding value function. Various techniques are known for deriving an optimal policy $\pi^*$, such as value iteration, policy iteration, linear programming Q-learning and SARSA.

A reinforcement learning system can be considered to have two components: an environment which simulates whatever context is of interest. An environment can be something as straightforward as a depiction of a physical space, or as esoteric as a simulation of a collection of celestial bodies. In certain useful examples the environment is a computer network. The second component is an agent, which observes the environment and enacts actions within it. The actions available to an agent are dependent on the context of the environment. For example, an agent might be able to move through the environment and pick up objects it comes across. The goal of the agent is to maximize a policy (as introduced above) which selects the best possible action at each step of the process.

At the start of the training process, an agent is given an initial observation of the environment and asked to output an action to execute. After receiving an action from the agent, the action is executed in the environment, and the observation (of the environment) is updated to reflect the updated state of the environment. For example, the observation might depict the world as a grid of empty spaces and walls, along with the current position of the agent within this environment. After the agent outputs an action to move in a certain direction, the new observation will reflect the new position of the agent.

After an action is executed, the new observation is given to the agent, along with a reward. This reward is intended to indicate to the agent how good the previous action was (that is, whether it related to a positive action towards satisfying the objective). If the agent moved towards its goal, then this reward should generally be positive, reinforcing the correct learning of the maximal policy. Similarly, if the agent moved away from its goal, the reward should generally be negative, disincentivizing the agent from acting in the same manner in future situations.

Typically, and for most scenarios, each item in the vector of values of an observation should have a fixed meaning. This consistency allows the agent to understand the environment as it trains and should provide deterministic consequences for each action executed by the agent. For example, if the observation is a grid of cells, in which the agent is able to move up, down, left or right within, each item should always represent the state of the same cells - that is, the first item in the vector of an observation should always represent the state of the cell at position (x=0; y=0), the second item the cell at position (x=1; y=0), etc...

In the subsequent description, the following terms shall be used:

- Action space - A description of all possible actions an agent is able to execute in an environment.

- Observation space - A description of all of the possible states in which an environment can exist.

- Reward - A value given to an agent as a result of an executed action, where a positive reward is meant to incentivise similar behaviour, whilst a negative reward is meant to disincentivize.

**Summary of the invention**

Reinforcement learning as an approach to training intelligent agents is beneficial because it does not require (but may still use) a ground truth (i.e. knowledge of the "live" environment) in order to train the agent. Furthermore, the agents that are produced via reinforcement learning can exhibit emergent behaviour, providing new approaches to solving problems that may not have previously been apparent. This emergent behaviour may be expected to be strongest when the agents are focussed on a relatively narrow task using a limited set of actions that are appropriate for that task. In addition to potentially improving the emergent behaviour that is exhibited by the trained agent, focussing the agents on a relatively narrow task using a limited set of actions reduces the amount of training that is needed (which may be prohibitively large otherwise).

In a first aspect of the present invention, there is provided a computer-implemented method of training an intelligent agent system for influencing the operation of a physical system to achieve an objective relating to an intended state of the physical system, the method comprising:

performing a respective reinforcement learning process for an intelligent agent, the reinforcement learning process being conducted within an environment that provides a representation of the physical system, the agent being trained to achieve the objective within the environment by carrying out one or more actions selected from a respective set of available actions, the training being based on a reward that is determined by the reinforcement learning process for each of the training steps,

wherein reinforcement learning process comprises providing, to the agent, a set of observations of the environment of that agent, the agent being configured to select the one or more actions in dependence on the set of observations to achieve the objective, the set of observations being provided in a data structure in which the set of observations are arranged in an order which is dependent on a starting position of the agent and/or a position relating to the objective, within the environment.

In this way, an agent having an objective which involves traversal by the agent of an environment may be trained using a smaller number of training steps, since transformation of the set of observations (which transforms how the agent perceives the environment) leads to a greater degree of similarity in the training steps (since the transformation may result in the agent being able to traverse the environment in a direction already trained on, rather than in a different (e.g. opposite) direction as would be the case in an untransformed set of observations.

The order of the set of observations may be dependent on a logical or spatial direction in the environment from the starting position of the agent to the position relating to the objective.

The method may comprise generating the set of observations in a first order, and transforming the set of observations into a second order different from the first order, wherein a first set of training steps are carried out by the agent based on the set of observations in the first order, and a second set of training steps are carried out based on the set of observations in the second order.

For example the transformation may comprise one or both of a shift in position of the observations within the data structure and a reversal of the order of at least some of the observations within the data structure.

The physical system may be a computer network, and the environment may be defined by a graph of nodes and edges, each node representing a device on the network, and each edge representing a communication channel between the two devices on the network. The objective may be for the agent to attack the computer network by infecting nodes along a path through the environment from its starting position until it reaches and infects a target node. The intelligent agent may be a first intelligent agent of a first type, and the first type of intelligent agent may be used to train a further, second type of intelligent agent, the second type of intelligent agent having an objective relating to an intended state of the computer network in which an intended consequence of an attack by the first type of intelligent agent is prevented or mitigated. The second type of intelligent agent may be trained using an environment which is modified by actions carried out by the first type of intelligent agent, wherein depending on a starting position of the first intelligent agent and/or a position relating to the objective of the first intelligent agent, within the environment, a set of learned actions to be carried out by the first intelligent agent is transformed before being carried out.

The learned actions to be transformed may relate to the traversal of the environment, and the transformation may be to reverse or rotate a direction indicated by those learned actions.

An order of the set of observations in the data structure may be correlated with a spatial or logical direction within the environment.

The actions available to the intelligent agent may be oriented only in a subset of available traversal directions within the observation space, and wherein traversal in the remaining traversal directions can be achieved by the intelligent agent only by way of transformation of the set of observations, and transformation of the consequent actions. This reduces the action space available to the agent, thus simplifying and speeding up the training process.

In a second aspect of the present invention, there is provided an intelligent-agent system for influencing the operation of a physical system to achieve an objective relating to an intended state of the physical system, the intelligent-agent system comprising an intelligent agent that is configured to achieve the objective by determining one or more actions to be taken by that agent in relation to the physical system, the one or more actions being selected from a respective set of available actions in order to achieve the objective based on observations of an environment, the environment providing a representation of the physical system;

wherein the system is configured to transform one or more learned actions of the intelligent agent in dependence on a starting position of the intelligent agent and/or a position relating to the objective of the intelligent agent, within the environment.

The learned actions to be transformed may relate to the traversal of the environment, and the transformation may be to reverse or rotate a direction indicated by those learned actions.

As will be appreciated, reinforcement learning agents learn by observing the state of an environment and enacting actions upon it. The results of these actions are reflected in changes to the next observation of the environment, and each action executed by the agent is rewarded either positively or negatively depending on whether the action executed led to desirable or undesirable effects in the environment.

The agent receives the observation of the environment as a vector of values, with each value having a given meaning that the agent "learns" during training. This means that the structure and format of the observation space is fixed - that is, each value in the observation space has the same meaning between each step in an episode, and between each episode in which the agent is trained or evaluated. For most purposes, this approach works. However, there are scenarios in which the specific position of each item in the vector of the observations can be altered such that an agent is able to learn different starting conditions of the environment in a reduced training time.

These situations are best exemplified, and most useful, in the case of graph-traversal problems, in which an agent is tasked with moving between a starting and an ending node on a graph. The straightforward approach to structuring the observation space for such an environment is to assign the state of each node in the graph to a specific value in the vector of the observation space. With a modest amount of training, if the agent is always presented with a starting node close to the beginning of the observation space, and an ending node close to the latter portion of the observation space, the agent will in essence learn to "move from left to right" across the observation space. However, when the agent is given an initial condition in which the starting and ending nodes are "reversed", going from right to left across the observation space requires additional training.

Using the approach described herein, the position of values in the observation space can be dynamically assigned based on the starting conditions of the environment and goal set for the agent, such that the agent is only required to learn one "direction", thus reducing the amount of training required for a more holistic understanding of the problem. Additionally, such an approach, when used in specific scenarios, can reduce the number of actions required by the agent to perform correctly, thus reducing complexity and training duration further.

The physical system may be a computer network that the system is configured to attack, the objective relating to an intended state of the computer network in which the operation of the computer network is impaired or disabled. The physical system may be a computer network that the system is configured to defend, the objective relating to an intended state of the computer network in which an intended consequence of the attack is prevented or mitigated.

The computer network may a software defined network.

The types of environments that the intelligent agents may be configured to operate in may include an application environment providing a representation of the network routing within the computer network, a network environment providing a representation of the network routing within the computer network, and a social environment providing a representation of the users of the computer network. Of course, it will be appreciated that the present technique may be used to create intelligent agent systems for controlling a wide range of physical systems other than computer networks. For example, the same technique may be deployed to create an intelligent agent system to control an individual computer system. Similarly, other intelligent agent systems may be created for controlling physical systems such as robots, autonomous vehicles, intelligent buildings and so on.

In a third aspect of the present invention, there is provided a computer system comprising a processor and a memory storing computer program code for performing a method according to the first aspect.

In a fourth aspect of the present invention, there is provided a computer program comprising instructions which, when executed by a computer, cause the computer to carry out a method according to the first aspect.

**Brief Description of the Figures**

Embodiments of the present invention will now be described by way of example only, with reference to the accompanying drawings, in which:

Figure 1 is a block diagram of a computer system suitable for the operation of embodiments of the present invention.

Figure 2 is a diagrammatic illustration of an exemplary intelligent-agent system according to embodiments of the invention.

Figure 3 is a flowchart representation of a method of training the intelligent-agent system according to embodiments of the invention.

Figure 4 is a block diagram representation of an exemplary system for training the intelligent-agent system using the method shown in figure 3.

Figure 5 is a schematic illustration of a first simple example using a linear set of light bulbs to be illuminated in sequence by an intelligent agent.

Figure 6 is a schematic illustration of a second simple example using a circular arrangement of lightbulbs to be illuminated in sequence by an intelligent agent.

Figure 7 is a schematic illustration of a computer network having nodes an edges, for traversal by an intelligent agent using the present technique.

Figures 8A and 8B are schematic illustrations of two training scenarios for the computer network of Figure 7, representing different starting points for traversal to a destination node.

**Detailed Description of Embodiments**

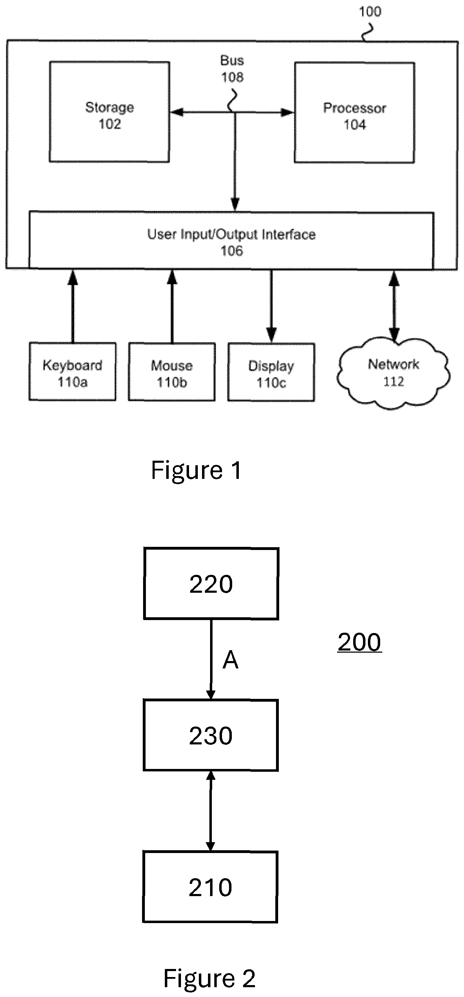

Figure 1 is a block diagram of a computer system 100 suitable for the operation of embodiments of the present invention. The system 100 comprises: a storage 102, a processor 104 and an input/output (I/O) interface 106, which are all communicatively linked over one or more communication buses 108.

The storage (or storage medium or memory) 102 can be any volatile read/write storage device such as a random access memory (RAM) or a non-volatile storage device such as a hard disk drive, magnetic disc, optical disc, ROM and so on. The storage 102 can be formed as a hierarchy of a plurality of different storage devices, including both volatile and non-volatile storage devices, with the different storage devices in the hierarchy providing differing capacities and response times, as is well known in the art.

The processor 104 may be any processing unit, such as a central processing unit (CPU), which is suitable for executing one or more computer programs (or software or instructions or code). These computer programs may be stored in the storage 102. During operation of the system, the computer programs may be provided from the storage 102 to the processor 104 via the one or more buses 108 for execution. One or more of the stored computer programs, when executed by the processor 104, cause the processor 104 to carry out a method according to an embodiment of the invention, as discussed below (and accordingly configure the system 100 to be a system 100 according to an embodiment of the invention).

The input/output (I/O) interface 106 provides interfaces to devices 110 for the input or output of data, or for both the input and output of data. The devices 110 may include user input interfaces, such as a keyboard 110a or mouse 110b as well as user output interfaces such as a display 110c. Other devices, such a touch screen monitor (not shown) may provide means for both inputting and outputting data. The input/output (I/O) interface 106 may additionally or alternatively enable the computer system 100 to communicate with other computer systems via one or more networks 112. It will be appreciated that there are many different types of I/O interface that may be used with computer system 100 and that, in some cases, computer system 100 may include more than one I/O interface. Furthermore, there are many different types of device 110 that may be used with computer system 100. The devices 110 that interface with the computer system 100 may vary considerably depending on the nature of the computer system 100 and may include devices not explicitly mentioned above, as would be apparent to the skilled person. For example, in some cases, computer system 100 may be a server without any connected user input/output devices. Such a server may receive data via a network 112, carry out processing according to the received data and provide the results of the processing via a network 112.

It will be appreciated that the architecture of the system 100 illustrated in figure 1 and described above is merely exemplary and that other computer systems 100 with different architectures (such as those having fewer components, additional components and/or alternative components to those shown in figure 1) may be used in embodiments of the invention. As examples, the computer system 100 could comprise one or more of: a personal computer; a laptop; a tablet; a mobile telephone (or smartphone); a television set (or set top box); a games console; an augmented/virtual reality headset; a server; or indeed any other computing device with sufficient computing resources to carry out a method according to embodiments of this invention.

Figure 2 is a diagrammatic illustration of an exemplary intelligent-agent system 200 according to embodiments of the invention. The intelligent-agent system 200 is configured such that, when it is deployed, it can exert control over a physical system 210 in order to influence the operation of that system 210.

The intelligent-agent system 200 comprises an intelligent agent 220 (which may also be referred to herein simply as an "agent"). The agent 220 is configured, through the use of a training technique (which will be discussed further below), to achieve an objective which relates to an intended state for the physical system 210. This can help with the training of the agent 220 and may encourage it to exhibit emergent behaviour.

The agent 220 comprises one or more sensors (not shown) for sensing properties of the physical system 210. The sensors of the agent 220 defines an environment 230 within which that agent 220 operates. The environment 230 for the agent 220 provides a particular representation (or view) of the physical system 210 (or a portion or aspect thereof) and is constructed by the agent 220 based on the data provided by its sensors. Accordingly, the environment 230 forms the basis on which the agent 220 interacts with the physical system 210. As such, the environment 230 provides an abstraction of the physical system 210 that is suitable for the intelligent agent 220 to achieve its objective.

The agent 220 further comprises one or more respective actuators that enable the agent 220 to carry out a set of actions $A$ in relation to the physical system 210. It will be appreciated that, from the agent's perspective, taking actions in relation to the physical system 210 is equivalent to taking actions in relation to the agent's environment 230 since the environment 230 is a representation of the physical system 210 for use by the agent. The agent 220 further comprises decision logic for deciding which actions (from the set of actions $A$) should be taken in order to achieve the objective. This decision as to which actions to take by the agent is based on observations of the agent's environment (i.e. from data received about the environment from the agent's sensors). The decision logic for the agent can be generated through the use of a modified Reinforcement Learning training technique that will be discussed further below.

For example, the decision logic of each agent may be configured such that, in making a decision as to the actions that should be taken, it determines a respective utility of each of the actions that are available to that agent (i.e. each action belonging to the respective set of actions $A$ for that agent). This utility reflects an expected reward that each action may provide (i.e. its usefulness in reaching the objective of the agent 220). The decision as to which action to take may then be based on the determined utility.

The intelligent agent 220 may be created as a software component. When deployed, the agent is deployed to an appropriate computer system, such as the exemplary computer system 100 discussed above, associated with the physical system 210 for execution. The computer system to which an agent is deployed has the necessary actuators to carry out actions in respect of the physical system 210 under the instructions of the intelligent agents 220. In some cases, the computer system to which the intelligent agent 220 is deployed may be dedicated to operating the intelligent agent 220 that is deployed to it. In other cases, the computer system to which intelligent agent 220 is deployed may be operated to provide other functionality for the physical system 210 that is not associated with an intelligent agent. In yet other cases, the intelligent agent 220 may be deployed to a mixture of dedicated and shared functionality computer systems.

In some cases, the intelligent agents 220 may be subversively (or maliciously) deployed onto the computer system(s) associated with the physical system 210 (e.g. by an unauthorised user of the computer system(s)). In such cases, the objective of the agent 220 may be detrimental to the operation of the physical system 210. That is to say, the actions taken by the intelligent agent 220 may tend to prevent the correct functioning of the physical system 210 such that the system is disabled or operates in an incorrect manner.

As an example, the physical system 210 may be a computer network (including, for example, a software defined network) which the intelligent agent system 200 is configured to attack. That is to say, the objective for the system 200 may be to impair or disable the computer network (or otherwise render it unable to function normally). For example, the intelligent-agent system may be used to carry out a so-called "red-team exercise" on the computer network.

Furthermore, the offensive agents may operate in different environments to those described above. For example, any type of offensive agent carrying out activities described across the MITRE framework (see https://attack.mitre.org/) may be used, such as reconnaissance, initial access, execution and persistence. Such agents may make use of any of the actions outlined in that framework (or indeed others) such as scanning a network, reaching out to a command and control server, opening ports, disabling applications or services, and so on.

In other cases, the intelligent agent 220 may be legitimately deployed onto the computer system(s) associated with the physical system 210 (e.g. by an authorised user of the computer system(s)). In such cases, the objective of the intelligent agent 220 may be beneficial to the operation of the physical system 210. That is to say, the actions taken by the intelligent agents 220 may tend to ensure the correct functioning of the physical system 210 (i.e. the functioning intended by an operator of the physical system 210).

As an example, the physical system 210 may be a computer network (including, for example, a software defined network) which the intelligent-agent system 200 is configured to defend. That is to say, the objective for the intelligent-agent system 200 may be to influence the computer network to substantially maintain a normal state of operation (or at least one in which an intended consequence of an attack is prevented or mitigated). As for the above example for using offensive agents to attack a network, there are a similarly wide range of types of defensive agent that may be used.

The first defensive agent operating in the application environment of the network may be concerned with activities such as blocking applications or services, taking actions specific to applications (such as collecting logs), updating applications, disabling applications, uninstalling applications, patching vulnerabilities, and so on. The second defensive agent operating in the network environment may be concerned with activities such as restricting traffic, updating firewall rules, blocking ports, blocking domains, isolating devices rerouting traffic (e.g. to a sink), changing network policies, updating malware signatures, collecting new threat intelligence data and so on. Again, some of the intelligent agents may be concerned with specific portions of the network, whilst others may operate across the entire network.

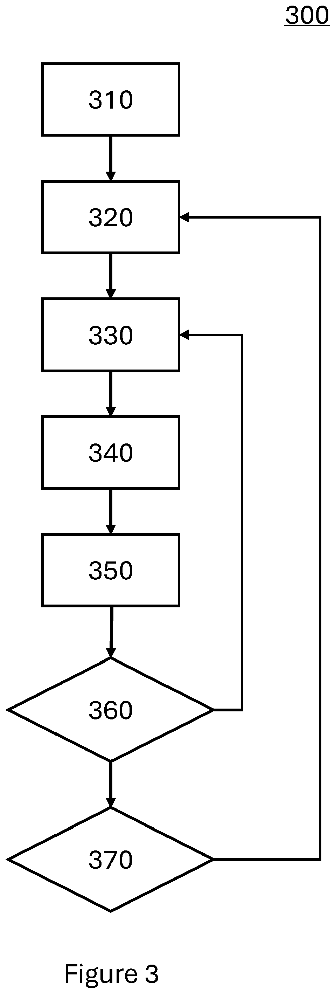

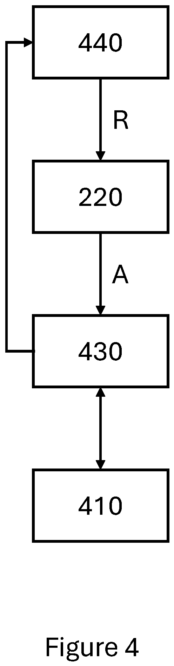

Figure 3 is a flowchart representation of a method 300 of training the intelligent-agent system 200 to influence the operation of a physical system to achieve an objective relating to an intended state of the physical system according to embodiments of the invention. This method 300 shown in figure 3 will be discussed in conjunction with figure 4, which is a block diagram representation of an exemplary system 400 for training the inelligent-agent system 200 using the method 300.

The method 300 starts at an operation 310. At operation 310, the method 300 initialises the agent 220 to be trained. As part of the initialisation of the agent, some initial configuration of decision logic may be provided, for example to define an initial policy to be applied by the agent in taking actions in response to the environment. For example, where the decision logic comprises a neural network that will be trained to learn the rewards for the actions in each state, some initial weights may be provided for this neural network in each agent. In some cases, this initial configuration may simply be a predetermined or random configuration. In other cases, the initial configuration may be derived from a previously trained intelligent agent. For example, the weights from the neural network of the same type of intelligent agent that has previously been individually trained may be used. As will be appreciated, this may help to speed up the collaborative learning of this method by transferring some of the previous learning that has previously taken place.

At an operation 320, the method 300 initialises a training environment 430 for the agent 220 and provides this to the agent as a set of observations of the training environment, for example in the form of a vector of values, as discussed herein. As will be understood from the preceding discussion, the environment 230 within which the agent operates provides a representation of the underlying physical system 210. Accordingly, the method 300 generates the training environment 430 by generating a representation of a training physical system 410. In this way, the training environment 430 will be interlinked to the real environments 230 in which the agents will be deployed. The training physical system 410 may be a real physical system or a simulated version of a physical system. In some cases, the training physical system 410 against which the agent is trained (whether real or simulated) may be identical to the physical system that they will be deployed to (or at least substantially so). Accordingly the training environments within which the intelligent agent is trained may be substantially identical to that in which it will ultimately be deployed. Indeed, in some cases the training physical system 410 may be the physical system 210 in which the agents are to operate once they have been trained. However, in other cases, the training physical system 410 may be different from the physical system 210 in which the agents will operate. In such cases, the agent learn general behaviours from their training that enable them to operate effectively in relation to the physical system 210 once deployed. Having initialised the training environments at operation 320, the method 300 proceeds to an operation 330. As part of the step 320, the set of observations may be transformed (for example shifted or inverted), depending on the starting conditions of the training example.

At operation 330, the method 300 receives a set of actions from the agent, selected by the agent based on its current policy and its view of the environment as set out in the set of observations provided to it at the step 320. That is to say, the method carries out a single reinforcement learning training step for the intelligent agent 220 in which the intelligent agent 220 determines how to act in that training step. The set of actions received from the agent 220 comprises one or more actions that that agent has determined should be taken in the current training step (or time step) based on the current state of their respective training environment 430. Note that, at the step 330, the agent may be carrying out this step based on a transformed set of observations (as discussed in relation to the step 320, and elsewhere). The agent may be unaware of this.

At operation 340, the method 300 carries out the actions that have been determined by the agents. In carrying out the actions, the state of the physical system 410 and the environment 430 will be changed. If the actions were selected on the basis of a transformed environment (set of observations), the actions themselves will also need to be transformed in a corresponding manner, before being applied to the environment. Having updated the state of the physical system 410 based on the actions determined by the agents 220 for that training step, the method 300 proceeds to an operation 350.

At operation 350, the method 300 determines a reward for the intelligent agent 220 for the training step. The reward for an agent 220 is based on a state of the environment 430 in relation to the objective.

To facilitate the determination of these rewards, the exemplary training system 400 comprises an agent evaluator 440. This is configured to determine a reward R for the agent based on the state of the environment 430 in relation to the objective.

Having determined the reward for the intelligent agent 220 the method 300 updates the configuration of the decision logic (policy) for the intelligent agent 220 based on the rewards received for the actions taken during the training step. For example, where the intelligent agent 220 comprises an artificial neural network that is being trained to predict a utility (e.g. expected reward) of different actions given a current state of the environment 430, the weights of that artificial neural network may be updated based on the adjusted reward R' received for its actions during that training step.

Having updated the configuration of the intelligent agent 220 following completion of the training step, the method 300 proceeds to an operation 360.

At operation 360, the method 300 determines whether more training steps should be carried out. As will be familiar to those skilled in the art of reinforcement learning, various states of the physical system 410 may be defined as being a terminal state. If, having carried out the actions for the intelligent agent 220 in a particular training step, the physical system 410 is left in a terminal state, the method 300 may proceed to an operation 380. Otherwise, the method 300 may reiterate to operation 330 to perform another training step with the agent 220.

At an operation 370, the method 300 the method determines whether further training episodes should take place. Repeating the reinforcement learning process over multiple episodes of training can help to refine the decision logic of the agent 220, improving its ability to achieve its objective. If further training episodes are to take place, the method 300 returns to operation 320 to initialise the training environments 430 for the next episode of training before repeating operations 330 to 360 in order to complete the next episode of training. As will be appreciated, in some cases, the training environments 430 may be kept the same for each episode of training, the initialisation effectively serving to reset them back to an initial state. However, in other cases, different training environments 430 may be used for future training episodes. Varying the environments 430 between episodes of training may help the agent 220 to learn more generalised behaviours. This can be helpful, for example, when the exact structure of the underlying physical system 210 against which they will be deployed is unknown (as may be the case when developing a intelligent-agent system for attacking a computer network). If no further training episodes are to be carried out, the method 300 ends.

Accordingly, through these adaptations to standard reinforcement learning techniques, the method 300 provides a technique for performing reinforcement learning processes for intelligent agents for the achievement of a goal.

Although the example of a computer network being the physical system 210 has been used in the preceding description of the invention, it will be appreciated that there are a wide range of physical systems 210 such as robotic systems, autonomous vehicles, intelligent buildings and so on that the intelligent-agent system 200 may be configured to control.

As another example, the method 300 may be used in a similar way to generate an intelligent-agent system 200 that is concerned with attacking or defending an individual computer system by respectively defining offensive or defensive agents that are respectively concerned with either undermining or maintaining the correct operation of the computer system.

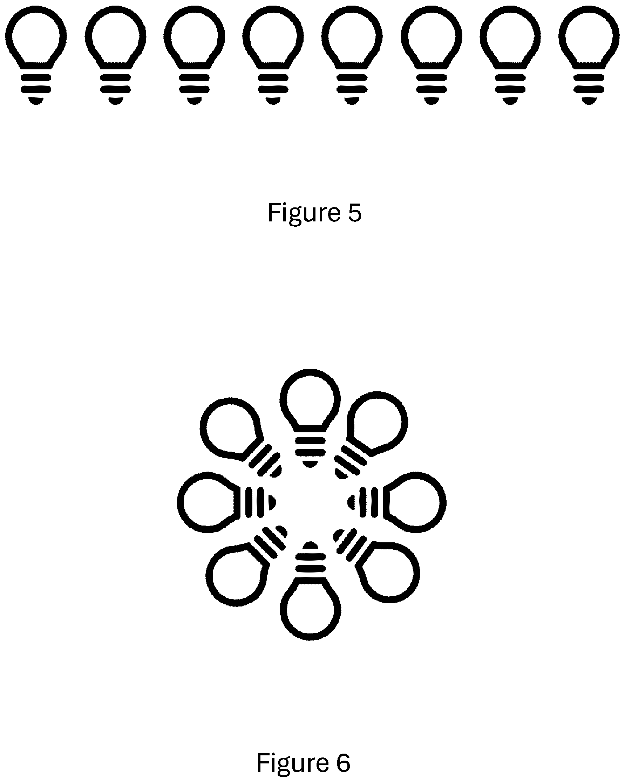

Consider a row of lightbulbs as depicted in Figure 5. Each bulb can be in one of two states: unlit or lit (0 or 1). An agent may be tasked with turning on and off the various lightbulbs such that it creates a "wave" effect, where the direction of the wave is defined by a starting bulb and an ending bulb. For such a scenario, a reasonable observation space may be a vector with eight values, where each value represents the state of each lightbulb in the environment. For example, the observation:

[0, 1, 0, 0, 0, 0, 0, 0]

would mean that the second lightbulb in the scenario is lit, while every other lightbulb is unlit. The agent may be given access to two possible actions - turning on or off a specific bulb. If the agent is trained in scenarios in which the starting bulb is one of the first few on the left, and the ending bulb is one of the last few on the right, the agent will eventually learn to "progress" the light going from left to right on the observation. However, if suddenly faced with a scenario in which the starting bulb is on the right and the ending bulb is on the left, the agent will initially fail, as it had never learnt this right to left direction. The agent will thus require additional training with these starting conditions in order to deal with both possible wave directions it is tasked with.

However, the present technique recognises how it is possible to reverse the observation such that the starting bulb is always (from the agent's perspective) "to the left" of the ending bulb. This means that, by choosing to reverse the order of each observation based on the starting conditions of the problem, an agent can be trained in the less complex problem of simply "moving to the right", rather than having to first understand which direction to move in.

This reversal is performed on the part of the environment, and as such the actions executed by the agent on the "actual" (rather than transformed) environment need also be translated such that they match the "reversed" observation space. For example, if the agent executed an action to turn on the bulb at index 2, and the observation is reversed, then this action should be performed on bulb at index 5 instead (assuming a 0-index notation).

In the above example, the observation is reversed. In another example, instead of merely reversing the observation, the values of the observation may be shifted such that the starting bulb is always the first item in the observation. For this, the bulbs may be envisaged as being instead arranged in a circular fashion as shown in Figure 6. The bulb at the top of Figure 6 may be denoted as the first item in the observation, with subsequent items representing successive bulbs in a clockwise direction.

For any possible starting and ending bulb, it is possible to "rotate" or shift the observation in either direction (clockwise or anti-clockwise) to arrive at a position in which the starting bulb is the first item in the observation (top bulb in the depiction) and the ending bulb is "to the right" (i.e. clockwise).

Generalising this to a scenario with N lightbulbs, with $N\_i$ as the starting bulb, the index of each bulb in the observation space (and consequently re-convert the actions given by the agent) can be converted by passing each original bulb index through the simple formula:

$$f(x)=(x-N\_i)\mod N.$$

By doing this, the agent's task is significantly simplified, as the optimal sequence of actions for any starting conditions is always the same (turn on bulb at index 1, turn off bulb at index 0, turn on bulb at index 2, etc., until the ending bulb is reached). This would significantly reduce the amount of training required by the agent, without sacrificing any of its abilities to perform correctly.

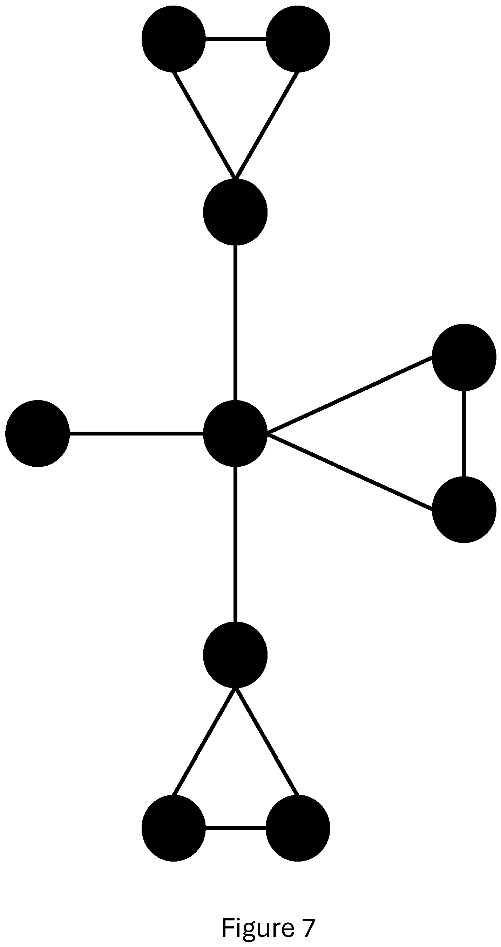

While the examples of Figure 5 and 6 are primitive, they illustrate the fundamentals of the concept. For a more useful example, consider the problem of modelling a computer network as a graph of nodes and edges. Each node represents a device on the network (i.e. an end-user device, a router, a firewall, a sensor, etc.), and edges between these nodes represent possible communication channels between these devices. An example graph is shown in Figure 7. Additionally, on top of this model, reinforcement learning agents are trained to attack the network, starting an outbreak (infection) on a specific device, and compromising nodes along a given path until the agent reaches (and infects) a desired target node.

The observation space given to the agent is represented in Figure 7, and is divided into two sections. The first section represents the nodes of the network, and is structured as <NodeID, state>, for each successive node.

Node states take one of three values:

State 0 = unknown by the agent

State 1 = known but not compromised by the agent

State 2 = known and compromised by the agent

The second portion of the observation space represents the edges of the graph, where each successive edge is made up of <NodeID 1, NodeID 2, state>. Edge states are one of two values:

State 0 = unknown by the agent

State 1 = known by the agent

The set of observations may thus be provided to the agent as a vector of values in which the first x values provide node data, and the subsequent y actions provide link data.

In terms of possible actions, the agent has two available: (i) "network discovery", performed on a given node id, which reveals to the agent the existence of neighbouring nodes and the edges that connect them; and (ii) "infect", performed on a given node id, which takes control of a given node.

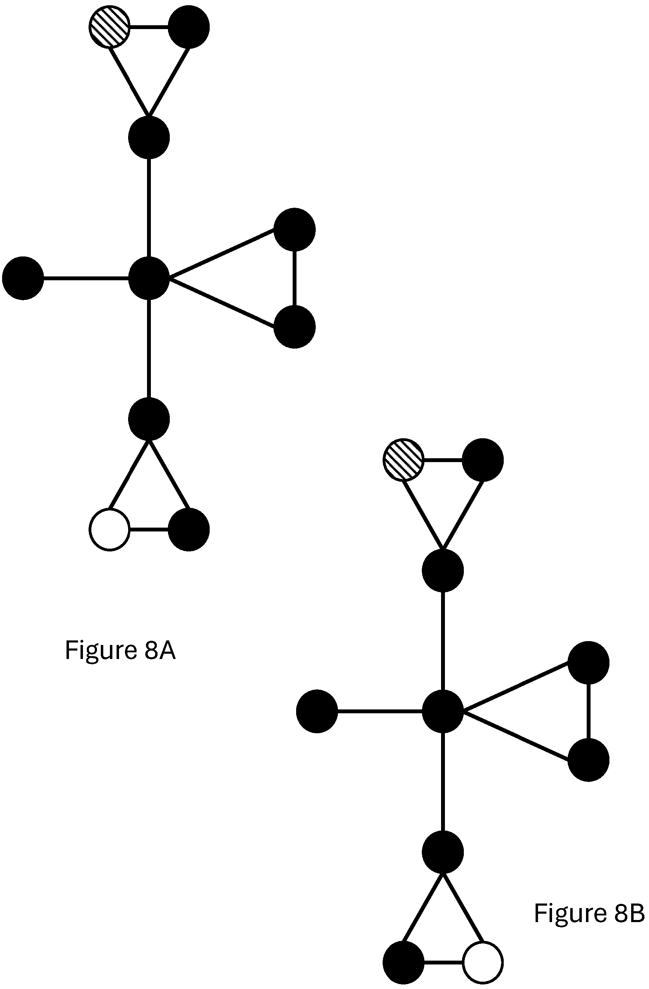

Referring to Figures 8A and 8B, where the agent starts on either of the two bottom "white" nodes (left hand bottom node for Figure 8A, and right hand bottom node for Figure 8B) and is tasked with traversing to the hatched node at the top of the network.

If in the observation space earlier node ids have been assigned to the bottom nodes on the network, then, similar to the lightbulb example, the agent will eventually learn a general direction to traversing the network (movement across the observation space). However, if the scenario is "flipped" such that the agent starts at the top of graph and the target node lays at the bottom, the agent will have difficulty in traversing the network in the opposite direction based on its existing training and resulting policy.

However, as with the simpler examples of Figures 5 and 6, it is possible to perform some transformations of the observation space (set of observations) given to the agent such that a general "direction of travel" can be achieved. One possible solution is to rotate the graph in a 2-dimensional way, such that the starting and target nodes are always in the same relative direction to each other. In this case, assuming a bottom-up approach is preferred, it is possible to progressively assign node ids based on their y-coordinate. A more general solution may be to simply invert the order of the observations in order to maintain consistency between a starting and target nodes.

As described, the present technique can provide significant benefits in the reduction of training required by a reinforcement learning agent. An additional benefit is that it may also allow for a reduction of action space under specific scenarios. Take for example, an agent that can move up, down, left and right on a maze of cells. Assume as well that there are only two types of mazes, ones that start on the left and end on the right, and ones where the opposite is true (start on the right and end on the left). In this system, the agent will need to use "move right" for the first set of maze scenarios, and "move left" for the second set of scenarios. It is possible to directly utilise the present technique to translate one set of scenarios into the other directly. This not only reduces the training time necessary for the agent to learn all sets of problems, but it also makes it possible to simplify the action space available to the agent as only one of either "move left" or "move right" is needed - i.e. these two actions can be converted simply to one action "lateral movement".

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example. Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention. It will be understood by those skilled in the art that, although the present invention has been described in relation to the above-described example embodiments, the invention is not limited thereto and that there are many possible variations and modifications which fall within the scope of the invention. The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A computer-implemented method of training an intelligent agent system for influencing the operation of a physical system to achieve an objective relating to an intended state of the physical system, the method comprising:

    performing a respective reinforcement learning process for an intelligent agent, the reinforcement learning process being conducted within an environment that provides a representation of the physical system, the agent being trained to achieve the objective within the environment by carrying out one or more actions selected from a respective set of available actions, the training being based on a reward that is determined by the reinforcement learning process for each of the training steps,

wherein reinforcement learning process comprises providing, to the agent, a set of observations of the environment of that agent, the agent being configured to select the one or more actions in dependence on the set of observations to achieve the objective, the set of observations being provided in a data structure in which the set of observations are arranged in an order which is dependent on a starting position of the agent and/or a position relating to the objective, within the environment.

2. The method of claim 1, wherein the order of the set of observations is dependent on a logical or spatial direction in the environment from the starting position of the agent to the position relating to the objective.

3. The method of claim 1 or claim 2, comprising generating the set of observations in a first order, and transforming the set of observations into a second order different from the first order, wherein a first set of training steps are carried out by the agent based on the set of observations in the first order, and a second set of training steps are carried out based on the set of observations in the second order.

4. The method of claim 3, wherein the transformation comprises one or both of a shift in position of the observations within the data structure and a reversal of the order of at least some of the observations within the data structure.

5. The method of any preceding claim, wherein the physical system is a computer network, and the environment is defined by a graph of nodes and edges, each node representing a device on the network, and each edge representing a communication channel between the two devices on the network.

6. The method of claim 5, wherein the objective is for the agent to attack the computer network by infecting nodes along a path through the environment from its starting position until it reaches and infects a target node.

7. The method of claim 6, wherein the intelligent agent is a first intelligent agent of a first type, and wherein the first type of intelligent agent is used to train a further, second type of intelligent agent, the second type of intelligent agent having an objective relating to an intended state of the computer network in which an intended consequence of an attack by the first type of intelligent agent is prevented or mitigated.

8. The method of claim 7, wherein the second type of intelligent agent is trained using an environment which is modified by actions carried out by the first type of intelligent agent, wherein depending on a starting position of the first intelligent agent and/or a position relating to the objective of the first intelligent agent, within the environment, a set of learned actions to be carried out by the first intelligent agent is transformed before being carried out.

9. The method of claim 8, wherein the learned actions to be transformed relate to the traversal of the environment, and the transformation is to reverse or rotate a direction indicated by those learned actions.

10. The method of any preceding claim, wherein an order of the set of observations in the data structure is correlated with a spatial or logical direction within the environment.

11. The method of any preceding claim, wherein the actions available to the intelligent agent are oriented only in a subset of available traversal directions within the observation space, and wherein traversal in the remaining traversal directions can be achieved by the intelligent agent only by way of transformation of the set of observations, and transformation of the consequent actions.

12. An intelligent-agent system for influencing the operation of a physical system to achieve an objective relating to an intended state of the physical system, the intelligent-agent system comprising an intelligent agent that is configured to achieve the objective by determining one or more actions to be taken by that agent in relation to the physical system, the one or more actions being selected from a respective set of available actions in order to achieve the objective based on observations of an environment, the environment providing a representation of the physical system;

wherein the system is configured to transform one or more learned actions of the intelligent agent in dependence on a starting position of the intelligent agent and/or a position relating to the objective of the intelligent agent, within the environment.

13. The intelligent-agent system according to claim 12, wherein the learned actions to be transformed relate to the traversal of the environment, and the transformation is to reverse or rotate a direction indicated by those learned actions.

**14.** A computer system comprising a processor and a memory storing computer program code for performing the steps of any one of claims 1 to 11.

**15.** A computer program comprising instructions which, when executed by a computer, cause the computer to carry out the method of any one of claims 1 to 11.

100

Bus
108

Storage
102

Processor
104

User Input/Output Interface
106

Keyboard
110a

Mouse
110b

Display
110c

Network
112

Figure 1

220

A

200

230

210

Figure 2

300

Figure 3

Figure 4

Figure 5

Figure 6

Figure 7

Figure 8A

Figure 8B

**EUROPEAN SEARCH REPORT**

Application Number

EP 24 22 1268

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Gangupantulu Rohit ET AL: "Using Cyber Terrain in Reinforcement Learning for Penetration Testing",<br><br>,<br>4 August 2022 (2022-08-04), pages 1-8,<br>XP093274905,<br>Retrieved from the Internet:<br>URL:https://arxiv.org/pdf/2108.07124v2<br>* section II.A, II.B, II.D, section III;<br>pages 2-4; figures 1A,2 *<br>----- | 1-15 | INV.<br>G06N3/092<br>G06N20/00 |
| A | JAKOB NYBERG ET AL: "Training Automated Defense Strategies Using Graph-based Cyber Attack Simulations",<br>ARXIV.ORG, CORNELL UNIVERSITY LIBRARY, 201 OLIN LIBRARY CORNELL UNIVERSITY ITHACA, NY 14853,<br>17 April 2023 (2023-04-17), XP091490478,<br>* section IV.A, IV.D, IV.E;<br>page 3 *<br>----- | 1-15 | |
| A | TONG ZHAO ET AL: "Graph Data Augmentation for Graph Machine Learning: A Survey",<br>ARXIV.ORG, CORNELL UNIVERSITY LIBRARY, 201 OLIN LIBRARY CORNELL UNIVERSITY ITHACA, NY 14853,<br>19 January 2023 (2023-01-19), XP091416593,<br>* section 2.3;<br>figure 1 *<br>----- | 1-15 | TECHNICAL FIELDS SEARCHED (IPC)<br><br>G06N |

The present search report has been drawn up for all claims

| Place of search | Date of completion of the search | Examiner |
|---|---|---|
| Munich | 9 May 2025 | Thielemann, Benedikt |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)